(19) Europäisches Patentamt

European Patent Office

Office européen des brevets

(11) Veröffentlichungsnummer: **0 513 535 B1**

(12) **EUROPÄISCHE PATENTSCHRIFT**

(45) Veröffentlichungstag der Patentschrift: **09.08.95**

(21) Anmeldenummer: **92106400.2**

(22) Anmeldetag: **14.04.92**

(51) Int. Cl.⁶: **C08L 25/12**, //(C08L25/12, 33:12),(C08L25/12,33:12,51:04)

(54) **Glasfaserverstärkte Styrol-Copolymerisate.**

(30) Priorität: **02.05.91 DE 4114248**

(43) Veröffentlichungstag der Anmeldung:
**19.11.92 Patentblatt 92/47**

(45) Bekanntmachung des Hinweises auf die
Patenterteilung:
**09.08.95 Patentblatt 95/32**

(84) Benannte Vertragsstaaten:
**BE DE FR GB IT NL**

(56) Entgegenhaltungen:
**EP-A- 0 200 184**
**EP-A- 0 253 236**
**WO-A-91/15543**
**US-A- 4 444 951**

(73) Patentinhaber: **BASF Aktiengesellschaft**
**Carl-Bosch-Strasse 38**
**D-67063 Ludwigshafen (DE)**

(72) Erfinder: **Nowakowsky, Bernhard Henryk, Dr.**
**Kardinal-Wendel-Strasse 35**
**W-6720 Speyer (DE)**
Erfinder: **Theysohn, Rainer, Dr.**
**Am Bruch 38**
**W-6710 Frankenthal (DE)**
Erfinder: **Bueschl, Rainer, Dr.**
**Hollandstrasse 14**
**W-6701 Roedersheim-Gronau (DE)**
Erfinder: **Muehlbach, Klaus, Dr.**
**Im Zaunruecken 20**
**W-6718 Gruenstadt (DE)**
Erfinder: **Mc Kee, Graham Edmund, Dr.**
**Kastanienweg 8**
**W-6940 Weinheim (DE)**

**Beschreibung**

Wie bei allen glasfaserverstärkten Thermoplasten besteht die technische Aufgabe auch bei glasfaserverstärkten Styrolcopolymeren darin, zwischen den organischen Polymeren und der (anorganisch-polaren) Glasoberfläche eine dauerhafte Bindung zu schaffen.

Dies wird vor allem dadurch erreicht, daß ein sog. Haftungsvermittler zugesetzt wird, der einerseits zu dem organischen Kunstharz und andererseits zu der Glasoberfläche eine gewisse Affinität besitzt.

In der EP-A1-303 919 werden als Haftungsvermittler Copolymere von Styrol, Acrylnitril und Maleinsäureanhydrid vorgeschlagen. Das Kunstharz ist dabei ein Styrol-Acrylnitril-(SAN-)Copolymer.

Diese Haftungsvermittler haben jedoch einen Nachteil; die entsprechenden Mischungen sind unter den üblichen Bedingungen, d.h. vor allem beim Spritzgießen schlecht verarbeitbar.

Nach der Erfindung bessere Haftungsvermittler für glasfaserverstärkte Styrol-Acrylnitrilcopolymerisate sind solche auf der Grundlage eines Copolymeren aus Methyl(meth)acrylat, Maleinsäure und Styrol, d.h. Haftungsvermittler, in denen gegenüber den bekannten Mitteln das Acrylnitril durch insbesondere Methylmethacrylat ersetzt ist.

Unmittelbarer Erfindungsgegenstand sind verstärkte thermoplastische Formmassen aus - bezogen auf die Summe aus A, B, C und D -

A: 40 bis 95 Gew.-% eines Copolymeren A aus, jeweils bezogen auf A

$a_1$: 90 bis 50 Gew.-% Styrol, $\alpha$-Methylstyrol, einem kernsubstituierten Styrolderivat oder Mischungen dieser Monomeren ($a_1$) und

$a_2$: 10 bis 50 Gew.-% Acrylnitril ($a_2$)

B: bis zu 50 Gew.-% eines Pfropfmischpolymerisats B

$b_1$: hergestellt entweder durch Emulsionspolymerisation von, bezogen auf B, 20 bis 80 Gew.-% eines Monomerengemischs auf der Grundlage entweder von

$b_{11}$: Styrol-Acrylnitril im Verhältnis 9:1 bis 4:6 oder

$b_{12}$: Styrol-Acrylnitril-Methylmethacrylat im Verhältnis 19:1:1 bis 8:6:6

auf 80 bis 20 Gew.-% eines als Emulsion gewonnenen Latex eines Elastomeren auf der Grundlage von Butadien oder Acrylester als Pfropfgrundlage;

oder durch

$b_2$: Lösungspolymerisation von 20 bis 80 Gew.-% eines Monomerengemischs auf der Grundlage von

$b_{21}$: Styrol-Acrylnitril im Verhältnis 9:1 bis 4:6 oder

$b_{22}$: Styrol-Acrylnitril-Methylmethacrylat im Verhältnis 19:1:1 bis 8:6:6

auf 80 bis 20 Gew.-% eines in Lösung hergestellten Elastomeren auf der Grundlage von Butadien oder Acrylester als Pfropfgrundlage;

C: 1 bis 50 Gew.-% eines Verstärkungsmittels C auf der Grundlage eines anorganischen Glases sowie erfindungsgemäß

D: 0,1 bis 50 Gew.-% eines Terpolymeren D auf der Grundlage von Styrol-Methylmethacrylat-Maleinsäureanhydrid und gegebenenfalls weiterer Comonomerer mit jeweils 1 bis 15 Gew.-% Styrol und Maleinsäureanhydrid und einem Styrol-Maleinsäureanhydrid-Verhältnis von 5:1 bis 1:5.

Die erfindungsgemäßen Formmassen können ferner bis zu 20 Gew.-% üblicher Zuschlagstoffe, wie Stabilisatoren, Antioxidantien, Antistatika, Fließverbesserer, Entformungshilfsmittel, Farbstoffe oder Pigmente enthalten.

Ferner können sie bis zu 20 Gew.-% eines Flammschutzmittels aus der Klasse der halogenierten, vorzugsweise bromierten, nieder- und hochmolekularen Verbindungen, wie Arylen, Arylethern, Arylalkylethern, Arylaminen, Arylanhydriden, Phenolen, Arylalkylimiden und Arylsiloxanen enthalten. Ein ebenfalls in vielen Fällen nützlicher Zusatz sind Polyester, z.B. Polyethylen- oder Polybutylen-terephthalat.

Der erfindungsgemäße Haftvermittler (Terpolymer) D ist bevorzugt in einer Menge von 1,5 bis 25 Gew.-%, und ganz besonders bevorzugt in einer Menge von 3 bis 10 Gew.-% in den Formmassen enthalten.

Komponente A

Als Komponente A der erfindungsgemäßen Formmassen werden Styrol(Meth)acrylnitril-Copolymerisate, Styrol-Methyl(meth)acrylat-Copolymere oder Copolymerisate aus Styrol, Methylmethacrylat und (Meth)-acrylnitril angewendet; diese bestehen im wesentlichen aus Copolymerisaten, die 10 bis 50 Gew.-%, insbesondere 20 bis 40 Gew.-% (Meth)acrylnitril und/oder Methyl(meth)acrylat, vorzugsweise Acrylnitril und/oder Methylmethacrylat als Monomere $a_2$ und 50 bis 90 Gew.-%, insbesondere 60 bis 80 Gew.-% Styrol als Monomer $a_1$ einpolymerisiert enthalten. Der Styrolbestandteil kann, um die Wärmeformbeständig-

2

keit zu verbessern, ganz oder teilweise durch α-Methylstyrol oder kernalkyliertes Styrol, insbesondere α-Methylstyrol ersetzt sein. Die besonders bevorzugt angewendeten Styrol-Acryl-nitril-Copolymerisate sind auch im Handel erhältlich und können z.B. nach der Lehre der DE-AS 10 01 001 bzw. DE-PS 10 03 436 hergestellt werden. Der Molekulargewichtsbereich der Copolymerisate kann $M_w = 8.10^4$ bis $M_w = 5.10^5$ - (Gewichtsmittel $M_w$ z.B. aus Lichtstreuung) betragen.

Komponente B

Die Komponente B bilden Pfropfmischpolymerisate, die nach Bedarf angewendet werden. Diese Pfropfmischpolymerisate sind aufgebaut, jeweils bezogen auf B, aus 20 bis 80 Gew.-% eines Gemisches aus Styrol und Acrylnitril, und gegebenenfalls Methylmethacrylat als weiterem Copolymeren, im Verhältnis von 9:1 bis 4:6 als Pfropfhülle und einer elastomeren Pfropfgrundlage (Kautschukkomponente) auf Basis eines Homo- oder Copolymeren von Butadien oder Acrylester.

Die Herstellung der Pfropfmischpolymerisate B ist bekannt. Sie können hergestellt werden durch Polymerisation eines Gemisches von z.B. Styrol und Acrylnitril und/oder Methacrylnitril in Gegenwart eines Kautschuks.

Der Kautschuk soll eine Glastemperatur [nach K.H. Illers und H. Breuer, Kolloid-Zeitschrift 137 (1961), Seite 110] haben, die unter 0°C, vorzugsweise unter -30°C liegt. Als Kautschuk kommen z.B. in Betracht: Polybutadien (vgl. DE-OS 14 20 775 und DE-OS 14 95 089); Copolymerisate aus Butadien und Styrol (vgl. GB-PS 649 166); Polyacrylsäureester (vgl. DE-AS 12 60 135) sowie Copolymeriste aus Acrylsäureester und Butadien (vgl. DE-AS 12 38 207); ferner Elastomere auf der Grundlage von Copolymerisaten von Acrylsäureestern mit Styrol, Acrylnitril und Vinylethern.

Außer Styrol kann in bekannter weise α-Methylstyrol und/oder kernalkylierte Styrole mit bis zu 12 C-Atomen, als monomere (Meth)acrylsäurealkylester solche mit $C_1$-$C_8$-Alkylestern sowie Methacrylnitril anstelle von Acrylnitril oder Mischungen davon verwendet werden.

Die Pfropfcopolymerisation kann dabei bekannterweise in Lösung, Suspension oder vorzugsweise in Emulsion erfolgen. Die weichphase des Pfropfmischpolymerisats weist bei der bevorzugten Herstellung des Kautschuks und der Pfropfung in Emulsion einen mittleren Teilchendurchmesser ($d_{50}$-Wert der integralen Masseverteilung) von 0,08 $\mu$m auf. In der Regel liegt nach an sich bekannter Vergrößerung der Teilchen, z.B. durch Agglomeration, der $d_{50}$-Wert im Bereich 0,1 bis 0,6 $\mu$m. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft.

Der Teil der Monomeren, der nicht auf den Kautschuk gepfropft ist, copolymerisiert für sich. Dieses Copolymerisat kann bei den hier in Rede stehenden Gemischen der Komponente A zugerechnet werden. Man kann den Anteil der gepfropften Monomeren dadurch ermitteln, daß man den Gelgehalt der Pfropfcopolymeren bestimmt.

Das Pfropfcopolymerisat wird in einem Lösungsmittel, z.B. in Methylethylketon, gelöst, dabei lösen sich nur die nicht gepfropften, für sich allein copolymerisierten Monomeren. Dieser Bestandteil ist, sofern vorhanden, für die Schlagzähigkeit der erfindungsgemäßen Formmasse mit verantwortlich.

Komponente C

Die erfindungsgemäße Formmasse enthält übliche Verstärkungsmittel, wie Glasfasern, Glaskugeln, Mineralfasern, Aluminiumoxidfasern, Glimmer, Quarzmehl, Wollastonit. Besonders bevorzugt sind glasfaserverstärkte Formmassen, wobei die Glasfasern sowohl als Kurzglasfasern mit einer mittleren Länge von 0,05 bis 0,5 mm oder in Granulatlänge (Glasfaserlänge von 2,0 bis 10 mm) vorliegen können.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 $\mu$m, vorzugsweise 3 bis 6 $\mu$m.

Komponente D

Das Terpolymerisat D kann durch Emulsionspolymerisation oder durch kontinuierliche Mischpolymerisation in Lösung hergestellt werden. Vorzugsweise wird die Technik der Emulsionspolymerisation angewendet.

Die Technik der Emulsionspolymerisation ist an sich bekannt und z.B. beschrieben in
- Ullmann's Encyklopädie der technischen Chemie; Band 19, 4. Auflage, 1980, Seite 132 bis 145;

- Encyclopedia of Polymer Science and Engineering
  First Edition, Band 5, Seite 801 bis 859;
  Second Edition, Band 6, Seite 1 bis 51.

Dabei werden Feststoffgehalte zwischen 5 und 75 Vol.-% verwendet, vorzugsweise zwischen 10 und 65 Vol.-%. Als Polymerisationsinitiatoren werden Substanzen, wie Kaliumpersulfat, Natriumpersulfat, organische Peroxide und Azo-Verbindungen, eingesetzt.

Als Emulgatoren können anionische, kationische und amphotere Typen verwendet werden.

Bei der kontinuierlichen Mischpolymerisation in Lösung wird das Terpolymere aus den Monomeren $d_1$ Methylmethacrylat, $d_2$ Styrol($\alpha$-Methyl-Styrol) und $d_3$ Maleinsäureanhydrid bei hohen Temperaturen unter starkem Rühren hergestellt. Die Monomeren $d_1$, $d_2$ und $d_3$ werden dazu kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49 (1957), Seite 803). Das Monomere $d_1$, das wesentlich MMA ist, aber auch sonstige Methacrylsäureester, ist in Mengen 98 bis 70 % vorzugsweise 95 bis 75 %, das Monomere $d_2$ Styrol oder $\alpha$-Methylstyrol in Mengen von 1 bis 15 %, und das Monomere $d_3$ MSA in Mengen von 1 bis 15 % im Terpolymerisat D enthalten. Das Verhältnis $d_2$:$d_3$ kann im Bereich 1:5 bis 5:1 variieren.

Das Terpolymerisat weist Viskositätszahlen im Bereich von 30 bis 150, vorzugsweise von 40 bis 120, gemessen in 0,5 % Lösungen in Dimethylformamid bei 25°C auf.

Komponente E

Die erfindungsgemäße Formmasse kann als Komponente E Zusatzstoffe enthalten, die für SAN-Polymerisate und Pfropfmischpolymerisate auf Basis von ABS, ASA etc. oder deren Mischungen typisch und gebräuchlich sind. Als solche Zusatzstoffe seien beispielsweise genannt: Füllstoffe sowie Materialien zur Erhöhung der Abschirmung von elektromagnetischen Wellen (z.B. Metallflocken, -pulver, -fasern, metallbeschichtete Füllstoffe), Farbstoffe, Pigmente, Antistatika, Antioxidantien, Stabilisatoren, auch Flammschutzmittel und insbesondere die Schmiermittel, die für die Weiterverarbeitung der Formmasse, z.B. bei der Herstellung von Formkörpern bzw. Formteilen, erforderlich sind. Von den Schmiermitteln sind insbesondere diejenigen auf Basis von N,N'-Bistearylethylendiamin (Acrawachs) zu nennen, die bevorzugt angewendet werden, um die Verarbeitungseigenschaften der Formmassen auf einem hohen Niveau zu halten. Diese sind überraschenderweise besser geeignet als Silikonöle, Pluriole und die Stearate.

Komponente F

Bei den Flammschutzmitteln kann es sich im weitesten Sinne handeln um Halogen-, vorzugsweise Brom, enthaltende nieder- und hochmolekulare (aromatische) Verbindungen, ausgewählt aus den Klassen der Aryle, Arylether, Arylalkylether, Arylamine, Arylamide, Arylanhydride, Phenole, Arylalkylimide und Arylsiloxane. Die folgende Zusammenstellung zeigt charakteristische Beispiele; sie beinhaltet keine Einschränkung:

Aryle:
Hexabrombenzol, bromiertes oligomeres Styrol (BOS), Pentabrommethylbenzol;

Arylether:
Dekabromdiphenylether, Octabromdiphenylether, Poly(2,6-dibrom-1,4-phenylen)ether;

Arylalkylether:
Bis(2,4,6-tribromphenoxy)ethan, Bis(pentabromphenoxy)ethan, Poly(tetrabrombisphenol-A-glycidyl)-ether, Poly(tetrabromhydrochinon-1,2-ethyliden)-ether;

Arylaminen:
Tris(2,4-dibromphenyl)amin, Bis(pentabromphenyl)amin, Tribromanilin;

Arylanhydride:
Tetrabromphthalsäureanhydrid;

Arylimide:
Tetrabromphthalsäureimid;

4

Arylalkylimide:
Ethylen-bis(tetrabromphthalimid)

Phenole:
Tetrabrombisphenol-A;

Arylsiloxane:
Tetrakis(2,4,6-tribromphenyl)siloxan.

Die halogenhaltigen Flammschutzmittel werden bevorzugt zusammen mit Synergisten, wie Antimon-, Wismut- und Phosphorverbindungen, eingesetzt.

Bevorzugt eingesetzt werden:

Octabromdiphenylether, DE 79 von Great Lakes, Poly(2,6-dibrom-1,4-phenylen)ether, PO 64 P von Great Lakes, Poly(tetrabrombisphenol-A-glycidyl)ether, F 2400 von Makhteshim, Ethylenbis(tetrabromphthalimid), Saytex BT 93 von Saytech und Bis(2,4,6-tribromphenoxi)ethan, Firemaster FF 680 von Great Lakes.

Besonders bevorzugt ist Poly- bzw. Oligo(tetrabrombisphenol-A)carbonat, BC 52 von Great Lakes und Poly(tetrabrombisphenol-A-glycidyl)ether (F 2400 von Makhteshim).

Diese Flammschutzmittel werden in Mengen von 1 bis 20 Gew.-% den erfindungsgemäßen Formmassen zugesetzt.

Komponente G

Die erfindungsgemäße Formmasse kann zur weiteren Verbesserung der Eigenschaften oder des Verarbeitungsverhaltens als Komponente G einen Polyesteranteil, z.B. Polyethylenterephthalat oder Polybutylenterephthalat, in Mengen von bis zu 20 Gew.-% enthalten.

Herstellung der Formmasse

Das Mischen der Komponenten A, B, C, D und gegebenenfalls E, F, G kann nach allen bekannten Methoden erfolgen. Vorzugsweise geschieht jedoch das Mischen der Komponenten A, B, C, D und gegebenenfalls E, F, G bei Temperaturen von 200 bis 300 °C durch gemeinsames Extrudieren, Kneten oder Verwalzen der Komponenten, wobei die Komponenten notwendigerweise zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente $b_{11}$) können aber auch teilweise entwässert oder direkt als Dispersion bei der Trocknung der Komponente $b_{11}$ zu $b_1$ oder zusätzlich gemeinsam mit $b_2$ zu B vermischt werden. Dabei erfolgt die vollständige Trocknung der Pfropfmischpolymerisate $b_{11}$ während des Vermischens. Anschließend wird $b_1$ mit $b_2$ und dem Polycarbonat bzw. B mit dem Polycarbonat vermischt. Es ist aber auch möglich, die teilweise entwässerte Komponente $b_{11}$ oder deren Dispersion direkt mit $b_{12}$, $b_2$, dem Polycarbonat A und der Komponente C zu vermischen, wobei dann während des Vermischens die vollständige Trocknung von $b_{11}$ erfolgt.

Es kann vorteilhaft sein, einzelne Komponenten vorzumischen. Auch das Mischen der Komponenten in Lösung und Entfernen der Lösemittel ist möglich.

Verwendung

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern. Besonders bevorzugt werden aus den nach dem erfindungsgemäßen Verfahren hergestellten Formmassen Formteile durch Spritzgießen für den Automobilbau hergestellt.

Verwendung für Gehäuse von Elektrogeräten, Haushaltsgeräten, Telefonen, für Platten, Rohre und im Kfz-Bau.

Prüfung

Die in den nachstehenden Beispielen verwendeten Eigenschaftsgrößen werden wie folgt bestimmt:

- Die Kerbschlagzähigkeit $a_k$ und die Schlagzähigkeit $a_n$ wurden nach DIN 53 453 an bei 260 °C gespritzten Normkleinstäben bei 23 °C und -40 °C gemessen.
- Die Biegespannung bei Höchstkraft $\sigma_{bB}$ [N/mm$^2$] wurde nach DIN 53 352 bestimmt.

EP 0 513 535 B1

- Die Reißfestigkeit $\sigma_R$ [N/mm$^2$] wurde nach DIN 53 455 bestimmt.
- Der E-Modul im Zugversuch $E_z$ [N/mm$^2$] wurde nach DIN 53 457 bestimmt.
- Die Viskositätszahl von Polybutylenterephthalat wurde gemäß DIN 53 728, Teil III, in Phenol/o-Dichlorbenzol (1:1) bestimmt.
- Der sog. Melt Volume Index (MVI) wurde bei 220°C bei einer Last von 10 kg nach der Vorschrift der DIN 53 735 bestimmt.

Komponente A

$a_1$    SAN-Copolymerisat 35 % AN, 65 % Styrol, VZ = 80 (ml/g)
$a_2$    SAN-Copolymerisat 30 % AN, 70 % Methylstyrol, VZ = 60 (ml/g)

Komponente B

$b_1$    E-Kautschukkomponente 70 % Polybutadien, 8 % AN, 22 % Styrol
$b_2$    L-Kautschukkomponente 75 % Polybutylacrylat, 7 % AN, 18 % Styrol

Komponente C

E-Glasfasern geschnitten 4,5 mm
Faserdurchmesser 10 $\mu$m
Fabrikat OCF 429

Komponente D

$d_1$    MMA-S-MSA-Terpolymerisat 75 % MMA, 12 % Styrol, 13 % MSA
$d_2$    MMA-s-MSA-Terpolymerisat 80 % MMA, 10 % Styrol, 10 % MSA
$d_3$    MMA-S-MSA-Terpolymerisat 85 % MMA, 8 % Styrol, 7 % MSA
Zum Vergleich wurde ein Terpolymerisat aus Styrol, Acrylnitril und Maleinsäureanhydrid im Verhältnis 65:27,5:7,5 (Gew.-%) verwendet ($D_v$).

Komponente F

F    Poly(tetrabrombisphenol-A-glycidyl)ether

6

Komponente G

G    Polybutylenterephthalat, VZ = 130 ml/g

**Beispiele**

| Bei-spiel | Zusammen-setzung [Gew.-Teile] | $a_k$ [kJ/m$^2$] | $a_n$ [kJ/m$^2$] | $\sigma_{bB}$ [N/mm$^2$] | $\sigma_R$ [N/mm$^2$] | $\varepsilon_R$ [%] | $E_Z$ [N/mm$^2$] | MVI [ml/g] |
|---|---|---|---|---|---|---|---|---|
| 1 | 60 $A_1$<br>15 $B_1$<br>15 C<br>10 $D_1$ | 6,5 | 24 | 142 | 102 | 2,8 | 6631 | 3,6 |
| 2 | 62 $A_2$<br>19 $B_2$<br>15 C<br>4 $D_1$ | 7 | 25 | 142 | 104 | 2,7 | 6677 | 2,4 |
| 3 | 60 $A_2$<br>19 $B_2$<br>15 C<br>6 $D_1$ | 8 | 26 | 153 | 107 | 3,0 | 6652 | 2,3 |
| 4 | 60 $A_2$<br>19 $B_2$<br>15 C<br>6 $D_2$ | 7,5 | 27 | 150 | 105 | 2,9 | 6654 | 2,6 |
| 5 | 55 $A_1$<br>24 $B_1$<br>15 C<br>6 $D_1$ | 9 | 29 | 135 | 99 | 3,3 | 5978 | 2,2 |
| 6 | 60 $A_1$<br>19 $B_1$<br>15 C<br>4 $D_3$ | 7,5 | 25 | 140 | 101 | 2,5 | 6611 | 2,7 |
| 7 | 61 $A_1$<br>35 C<br>4 $D_2$ | 6 | 21 | 220 | 154 | 1,8 | 11712 | 3,6 |
| 8 | 59 $A_1$<br>35 C<br>6 $D_2$ | 5 | 18 | 201 | 149 | 1,8 | 11648 | 2,5 |

Beispiele (Forts.)

| Bei-spiel | Zusammen-setzung [Gew.-Teile] | $a_k$ [kJ/m²] | $a_n$ [kJ/m²] | $\sigma_{bB}$ [N/mm²] | $\sigma_R$ [N/mm²] | $\varepsilon_R$ [%] | $E_Z$ [N/mm²] | MVI [ml/g] |
|---|---|---|---|---|---|---|---|---|
| 9 | 55 $A_1$<br>17 $B_1$<br>14 C<br>6 $D_2$<br>8 F | 7 | 22 | 135 | 82 | 2,6 | 5570 | 3,1 |
| 10 | 57 $A_1$<br>18 $B_1$<br>14 C<br>6 $D_2$<br>5 G | 8 | 27 | 149 | 104 | 2,7 | 6610 | 4,9 |

| Vergleichsversuche | | | | | | | | |
|---|---|---|---|---|---|---|---|---|
| Vgl.-versuche | Zusammensetzung [Gew.-Teile] | $a_k$ [kJ/m²] | $a_n$ [kJ/m²] | $\sigma_{bB}$ [N/mm²] | $\sigma_R$ [N/mm²] | $\varepsilon_R$ [%] | $E_Z$ [N/mm²] | MVI [ml/g] |
| I | 66 $A_1$<br>19 $B_2$<br>15 C | 4 | 12 | 112 | 76 | 1,6 | 6659 | 3,8 |
| II | 66 $A_2$<br>19 $B_2$<br>15 C | 4,5 | 12 | 117 | 78 | 1,8 | 6668 | 1,8 |
| III | 65 $A_1$<br>35 C | 4 | 11 | 164 | 124 | 1,3 | 11950 | 1,7 |
| IV | 65 $A_2$<br>35 C | 4 | 12 | 172 | 127 | 1,3 | 12150 | 1,4 |
| V | 60 $A_1$<br>15 $B_1$<br>15 C<br>10 $D_v$ | 5 | 18 | 155 | 101 | 1,9 | 6654 | 1,6 |
| VI | 60 $A_1$<br>19 $B_1$<br>15 C<br>6 $D_v$ | 6 | 20 | 142 | 100 | 2,1 | 6620 | 1,2 |
| VII | 55 $A_1$<br>24 $B_1$<br>15 C<br>6 $D_v$ | 6,5 | 21 | 138 | 97 | 2,3 | 5789 | 0,9 |

**Patentansprüche**

1. Thermoplastische Formmasse aus - bezogen auf die Summe aus A, B, C und D -
   A: 40 bis 95 Gew.-% eines Copolymeren A aus, jeweils bezogen auf A
   $a_1$: 90 bis 50 Gew.-% Styrol, $\alpha$-Methylstyrol, einem kernsubstituierten Styrolderivat oder Mischungen dieser Monomeren ($a_1$) und
   $a_2$: 10 bis 50 Gew.-% Acrylnitril ($a_2$)
   B: bis zu 50 Gew.-% eines Pfropfmischpolymerisats B
   $b_1$: hergestellt entweder durch Emulsionspolymerisation von, bezogen auf B, 20 bis 80 Gew.-% eines Monomerengemischs auf der Grundlage entweder von
   $b_{11}$: Styrol-Acrylnitril im Verhältnis 9:1 bis 4:6 oder
   $b_{12}$: Styrol-Acrylnitril-Methylmethacrylat im Verhältnis 19:1:1 bis 8:6:6
   auf 80 bis 20 Gew.-% eines als Emulsion gewonnenen Latex eines Elastomeren auf der Grundlage von Butadien oder Acrylester als Pfropfgrundlage;
   oder durch
   $b_2$: Lösungspolymerisation von 20 bis 80 Gew.-% eines Monomerengemischs auf der Basis entweder von
   $b_{21}$: Styrol-Acrylnitril im Verhältnis 9:1 bis 4:6 oder
   $b_{22}$: Styrol-Acrylnitril-Methylmethacrylat im Verhältnis 19:1:1 bis 8:6:6
   auf 80 bis 20 Gew.-% eines in Lösung hergestellten Elastomeren auf der Grundlage von Butadien oder Acrylester als Pfropfgrundlage;

   C: 1 bis 50 Gew.-% eines Verstärkungsmittels C auf der Grundlage eines anorganischen Glases sowie
   D: 0,1 bis 50 Gew.-% eines Terpolymeren D auf Basis Styrol-Methylmethacrylat-Maleinsäureanhydrid und gegebenenfalls weiterer Comonomerer mit jeweils 1 bis 15 Gew.-% Styrol und Maleinsäureanhydrid und einem Styrol-MaleinsäureanhydridVerhältnis von 5:1 bis 1:5.

2. Formmasse nach Anspruch 1, enthaltend Terpolymer D in einer Menge von 1,5 bis 25 Gew.-%.

3. Formmasse nach Anspruch 1, enthaltend bis zu 20 Gew.-% üblicher Zuschlagstoffe, wie Stabilisatoren, Antioxidantien, Antistatika, Fließverbesserer, Entformungshilfsmittel, Farbstoffe oder Pigmente.

4. Formmasse nach Anspruch 1, enthaltend bis zu 20 Gew.-% eines Flammschutzmittels.

**Claims**

1. A thermoplastic molding composition composed of, based on the total of A, B, C and D,
   A: 40-95% by weight of a copolymer A composed of, in each case based on A,
   $a_1$: 90-50% by weight of styrene, $\alpha$-methylstyrene, a nuclear-substituted styrene derivative or mixtures of these monomers and
   $a_2$: 10-50% by weight of acrylonitrile,
   B: up to 50% by weight of a graft copolymer B
   $b_1$: prepared either by emulsion polymerization of, based on B, 20-80% by weight of a monomer mixture based either on
   $b_{11}$: styrene/acrylonitrile in the ratio from 9:1 to 4:6 or
   $b_{12}$: styrene/acrylonitrile/methyl methacrylate in the ratio from 19:1:1 to 8:6:6
   onto 80-20% by weight of a latex, obtained as emulsion, of an elastomer based on butadiene or acrylic ester as grafting base;
   or by
   $b_2$: solution polymerization of 20-80% by weight of a monomer mixture based on either
   $b_{21}$: styrene/acrylonitrile in the ratio from 9:1 to 4:6 or
   $b_{22}$: styrene/acrylonitrile/methyl methacrylate in the ratio from 19:1:1 to 8:6:6
   onto 80-20% by weight of an elastomer, prepared in solution, based on butadiene or acrylic ester as grafting base;
   C: 1-50% by weight of a reinforcing agent C based on an inorganic glass and
   D: 0.1-50% by weight of a terpolymer D based on styrene/methyl methacrylate/maleic anhydride, with or without other comonomers, with in each case 1-15% by weight of styrene and maleic anhydride and a styrene/maleic anhydride ratio of from 5:1 to 1:5.

2.  A molding composition as claimed in claim 1, containing terpolymer D in an amount of 1.5-25% by weight.

3.  A molding composition as claimed in claim 1, containing up to 20% by weight of conventional additives such as stabilizers, antioxidants, antistatics, flow improvers, release agents, dyes or pigments.

4.  A molding composition as claimed in claim 1, containing up to 20% by weight of a flame retardant.

**Revendications**

1.  Masse à mouler thermoplastique composée de - par rapport à la somme de A, B, C et D -

    A :     40 à 95 % en poids d'un copolymère A constitué de, respectivement par rapport à A

    $a_1$ : 90 à 50 % en poids de styrène, d'$\alpha$-méthylstyrène, d'un dérivé du styrène substitué sur le noyau ou de mélanges de ces monomères ($a_1$) et

    $a_2$ : 10 à 50 % en poids d'acrylonitrile ($a_2$)

    B :     jusqu'à 50% en poids d'un copolymère greffé B

    $b_1$ : préparé soit par polymérisation en émulsion de, par rapport à B, 20 à 80 % en poids d'un mélange de monomères, à base de, soit

    $b_{11}$ : styrène-acrylonitrile dans le rapport de 9 : 1 à 4 : 6, soit

    $b_{12}$ : styrène-acrylonitrile-méthacrylate de méthyle dans le rapport de 19 : 1 : 1 à 8 : 6 : 6

    sur 80 à 20 % en poids d'un latex obtenu sous forme d'une émulsion d'un élastomère à base de butadiène ou d'ester acrylique en tant que base de greffage;

    soit par

    $b_2$ : polymérisation en solution de 20 à 80 % en poids d'un mélange de monomères à base de

    $b_{21}$ : styrène-acrylonitrile dans le rapport 9 : 1 à 4 : 6, soit

    $b_{22}$ : styrène-acrylonitrile-méthacrylate de méthyle dans le rapport de 19 : 1 : 1 à 8 : 6 : 6

    sur 80 à 20 % en poids d'un élastomère préparé en solution, à base de butadiène ou d'ester acrylique en tant que base de greffage;

    C :     1 à 50 % en poids d'un agent de renforcement C à base d'un verre inorganique de même que,

    D :     0,1 à 50 % en poids d'un terpolymère D à base de styrène-méthacrylate de méthyle-anhydride maléique et le cas échéant d'autres comonomères avec respectivement 1 à 15 % en poids de styrène et d'anhydride maléique et avec un rapport de styrène-anhydride maléique de 5 : 1 à 1 : 5.

2.  Masse à mouler selon la revendication 1, qui contient un terpolymère D par quantités de 1,5 à 25 % en poids.

3.  Masse à mouler selon la revendication 1, qui contient jusqu'à 20 % en poids d'additifs courants, tels que des stabilisateurs, des agents antioxydants, des agents antistatiques, des agents améliorant l'écoulement, des adjuvants au démoulage, des colorants ou des pigments.

4.  Masse à mouler selon la revendication 1, qui contient jusqu'à 20 % d'un agent ignifuge.